# EUROPEAN PATENT APPLICATION

(11) **EP 4 851 263 A1**
(43) Date of publication of application: **09.12.2026**
(21) Application number: 25913941.8
(22) Date of filing: 12.11.2025
(51) Int. Cl.: C10G 2/00, B01J 35/27, B01J 27/10, B01J 23/18

(54) **METHOD FOR UPCYCLING GREENHOUSE GAS INTO LONG-CHAIN HYDROCARBONS USING MOLTEN CATALYST, MOLTEN CATALYST THEREFOR, AND HYDROCARBON COMPOSITION PREPARED THEREFROM**

(30) Priority: 16.04.2025 KR 20250049275; 23.05.2025 KR 20250067288
(71) Applicant: Seoul National University R&DB Foundation, Seoul 08826 (KR)
(72) Inventor: PARK, Sang Wook, Gwanak-gu, Seoul 08826 (KR); SONG, Jun Seoki, Gwanak-gu, Seoul 08826 (KR)
(74) Representative: TRBL Intellectual Property
(86) International application number: PCT/KR2025/018607
(87) International publication number: WO 2026/221187

(57) **Abstract**

The present invention relates to a method for upcycling greenhouse gases to long-chain hydrocarbons, comprising: a step of introducing a reaction gas comprising greenhouse gases into a reactor; a step of inducing a reaction by bringing the reaction gas into contact with a molten catalyst disposed in the reactor, the molten catalyst having a two-layer structure comprising a first molten catalyst layer and a second molten catalyst layer positioned above the first molten catalyst layer; and a step of obtaining a product comprising hydrocarbons through the reaction in a one-pot process.

## Description

### FIELD OF THE INVENTION

The present invention relates to a method for upcycling greenhouse gases to long-chain hydrocarbons using a molten catalyst, a molten catalyst therefor, and a hydrocarbon composition produced therefrom.

### BACKGROUND OF THE INVENTION

Reducing emissions of greenhouse gases, which are identified as major contributors to global warming, particularly carbon dioxide (CO₂) and methane (CH₄), and effectively utilizing the same, are pressing global challenges. Beyond merely capturing and storing such greenhouse gases, Carbon Capture and Utilization (CCU) technologies, which convert the same into useful chemical products or fuels, have attracted significant attention as a key strategy for achieving a carbon-neutral society. In particular, technologies for directly synthesizing long-chain hydrocarbons from greenhouse gases are of great importance in replacing conventional fossil fuel-based chemical industries and establishing a sustainable supply system for fuels and chemical feedstocks.

Among the hydrocarbon synthesis technologies known to date, the most representative is the Fischer-Tropsch synthesis (hereinafter, "FT synthesis"), which has a history of over 100 years. The FT synthesis generally involves a preliminary step of producing synthesis gas (syngas, a mixture of H₂ and CO) from coal, natural gas, biomass, or greenhouse gases such as carbon dioxide or methane. The produced syngas is then converted into hydrocarbons of various chain lengths by reacting over an iron (Fe)- or cobalt (Co)-based solid catalyst under high-temperature (typically 200-350°C) and high-pressure (typically 5-40 atm) conditions. However, the FT synthesis has inherent technical and economic limitations, comprising (1) the complexity of a multi-step process requiring prior production of syngas, (2) high energy consumption and capital costs due to high-temperature and high-pressure reaction conditions, and (3) the need for additional reforming processes or hydrogen production facilities, such as water electrolysis, particularly for producing syngas from greenhouse gases.

In addition to the FT synthesis, various studies have been conducted to synthesize hydrocarbons using greenhouse gases. For example, electrochemical carbon dioxide reduction (electrochemical CO₂ reduction) has the advantages of being operable under room temperature and atmospheric pressure conditions and facilitates the utilization of renewable energy; however, it is generally limited to the production of low-carbon-number compounds such as formic acid, carbon monoxide, methane, and ethylene (C1-C2), and still faces difficulties in efficiently synthesizing long-chain hydrocarbons having six or more carbon atoms (C6 or higher).

As a thermochemical approach, an alkane aromatization process using a solid acid catalyst such as a zeolite has been studied. This approach has shown the potential to produce hydrocarbons of up to C17, for example, by reacting butane (C₄H₁₀) with carbon dioxide; however, it has been pointed out that the products contain a significant amount of Polycyclic Aromatic Hydrocarbons (PAHs), which may cause environmental pollution. In addition, alkanes having a higher carbon number than methane have often been used as the main reactants.

The methane dry reforming reaction is primarily used to produce syngas by reacting methane with carbon dioxide, and although a small amount of short-chain hydrocarbons, such as C2-C3 species, may be generated as by-products in this process, it is not suitable for producing long-chain hydrocarbons as the main products.

In view of the foregoing, conventional technologies for greenhouse gas conversion and hydrocarbon synthesis have suffered from one or more problems, such as multi-step processes required for efficiently synthesizing long-chain hydrocarbons, harsh reaction conditions, a limited carbon number range of products, the possibility of generating harmful by-products, or low productivity and selectivity. Accordingly, there is an urgent need for the development of an innovative technology capable of directly converting major greenhouse gases, carbon dioxide and methane, into long-chain hydrocarbons having seven or more carbon atoms (C7 or higher) in a single process (one-pot process), under milder conditions, with high efficiency and selectivity, and in an environmentally friendly manner.

### BRIEF DESCRIPTION OF THE INVENTION

### Problem to be Solved

The present invention has been made to overcome the limitations of the conventional technologies described in the above background, and is intended to achieve the following objectives.

First, in producing long-chain hydrocarbons using greenhouse gases, particularly carbon dioxide and methane, as raw materials, the present invention aims to solve the problems of complex and energy-intensive multi-step processes, such as the conventional Fischer-Tropsch (FT) synthesis, which require a separate syngas production step or harsh reaction conditions of high temperature and high pressure, and to provide a novel method capable of directly and efficiently synthesizing desired hydrocarbons in a single process (one-pot process).

Second, the present invention aims to provide a technology capable of producing long-chain hydrocarbons having a wide carbon number range of C7 to C33, which have high industrial applicability, with high yield and selectivity, beyond the limitation of short carbon-chain compounds (e.g., C1-C6) mainly produced in electrochemical carbon dioxide reduction technologies and the like.

Third, the present invention aims to provide a method for producing hydrocarbons in a more environmentally friendly manner by minimizing or controlling the formation of harmful by-products such as polycyclic aromatic hydrocarbons (PAHs), which may be problematic in certain thermochemical conversion processes.

Fourth, the present invention aims to provide a novel molten catalyst system exhibiting excellent activity and controlled selectivity, which enables effective conversion of greenhouse gases as described above.

Fifth, the present invention aims to provide a long-chain hydrocarbon composition produced by the method and catalyst system of the present invention, having a specific carbon number distribution and chemical composition, and thus being useful for various industrial applications such as fuels and chemical feedstocks.

### Means for Solving the Problem

A method for upcycling greenhouse gases to long-chain hydrocarbons according to an embodiment of the present invention is characterized by comprising: a step of injecting a reaction gas comprising greenhouse gases into a reactor; a step of inducing a reaction by bringing the reaction gas into contact with a molten catalyst disposed in the reactor, the molten catalyst having a two-layer structure comprising a first molten catalyst layer and a second molten catalyst layer positioned above the first molten catalyst layer; and a step of obtaining a product comprising hydrocarbons through the reaction in a one-pot process.

In one embodiment, the hydrocarbons may be long-chain hydrocarbons having a carbon number of C7 or greater. The hydrocarbons may have a carbon number of C33 or less.

In one embodiment, the reaction gas may comprise at least one selected from the group consisting of methane, carbon dioxide, hydrogen, water, CO, ethane, propane, butane, ethene, propene, and butene.

In one embodiment, the reaction may be performed at a temperature in a range of 250 °C to 1,200 °C.

In one embodiment, the reaction may be performed at a pressure in a range of atmospheric pressure to 50 atm.

In one embodiment, the first molten catalyst layer may be an alloy that exists in a liquid phase within an operating temperature range and comprises at least one metal component that contributes to activation of greenhouse gas reactants or formation of carbon-carbon bonds, and the second molten catalyst layer comprises at least one metal halide, wherein the metal halide is selected from the group consisting of a first metal halide exhibiting Lewis acid properties that promotes hydrocarbon chain growth and a second metal halide forming a eutectic mixture with the first metal halide that improves stability and fluidity of a molten salt layer.

In one embodiment, the at least one metal component constituting the first molten catalyst layer may be selected from the group consisting of metal-based materials comprising gallium (Ga), bismuth (Bi), tin (Sn), nickel (Ni), copper (Cu), and iron (Fe), and salts thereof (halides, nitrates, and carbonates).

In one embodiment, the at least one metal halide constituting the second molten catalyst layer may be selected from the group consisting of halides of metals comprising manganese, potassium, lithium, calcium, magnesium, and copper.

A hydrocarbon composition according to an embodiment of the present invention is produced by the method according to an embodiment of the present invention, and comprises hydrocarbons having a carbon number ranging from C7 to C33, wherein the hydrocarbons comprise a plurality of compound groups selected from aliphatic hydrocarbons, aromatic hydrocarbons, and oxygenates.

A hydrocarbon composition according to an embodiment of the present invention comprises a plurality of hydrocarbon compounds having a carbon number of C7 or greater, wherein the plurality of hydrocarbon compounds comprises (i) at least one aliphatic hydrocarbon selected from cyclohexane derivatives, cyclohexadiene derivatives, cyclopentadiene derivatives having alkyl groups, and linear olefins; (ii) at least one aromatic hydrocarbon selected from alkylbenzene derivatives and polycyclic aromatic hydrocarbon derivatives; and (iii) at least one oxygenate selected from aromatic aldehydes, ketones, and esters.

In one embodiment, the composition may be produced under reaction temperature conditions in a range of 250 °C to 1,200 °C, and the relative content ratios of the aliphatic hydrocarbons, the aromatic hydrocarbons, and the oxygenates may vary according to the reaction temperature.

In one embodiment, among hydrocarbons in a range of C7 to C18, hydrocarbons in a range of C8 to C13 may be included at a relatively higher proportion than hydrocarbons in other carbon number ranges.

A molten catalyst according to another embodiment of the present invention is characterized by comprising: a first molten catalyst layer comprising at least one selected from the group consisting of metal-based materials comprising gallium (Ga), and bismuth (Bi), tin (Sn), nickel (Ni), copper (Cu), and iron (Fe), and salts thereof, and providing first Lewis acid sites; and a second molten catalyst layer positioned above the first molten catalyst layer, comprising at least one selected from the group consisting of halides of metals comprising manganese, potassium, lithium, calcium, magnesium, and copper, and providing second Lewis acid sites that promotes formation of long-chain hydrocarbons.

In one embodiment, the first molten catalyst layer may comprise an alloy of gallium (Ga) and bismuth (Bi), and may have a composition of GaₓBi₁₋ₓ (where x is a mole fraction of gallium (Ga) in a range of 0.11 to 0.50).

In one embodiment, the second molten catalyst layer may comprise a mixture of a manganese halide and an alkali metal halide, and a molar ratio of the manganese halide to the alkali metal halide may be 33:67 to 67:33.

A system for upcycling greenhouse gases to long-chain hydrocarbons according to another embodiment of the present invention is characterized by comprising: (a) a reaction gas supply unit comprising a plurality of mass flow controllers (MFCs) configured to supply a plurality of reaction gases comprising greenhouse gases at respective controlled flow rates; (b) a vertical reactor made of a quartz tube, connected to the reaction gas supply unit, in which a molten catalyst having a two-layer structure is disposed, and in which a chemical reaction occurs as the reaction gas contacts the molten catalyst; (c) a temperature control unit comprising a high-temperature electric furnace surrounding the reactor and controlling an internal temperature; and (d) a product recovery unit connected to an outlet of the reactor to condense long-chain hydrocarbons from gaseous products discharged therefrom and recover the same in liquid or solid form.

In one embodiment, the molten catalyst may comprise a first molten catalyst layer and a second molten catalyst layer positioned above the first molten catalyst layer, wherein the first molten catalyst layer is an alloy that exists in a liquid phase within an operating temperature range and comprises at least one metal component that contributes to activation of greenhouse gas reactants or carbon-carbon bond formation, and the second molten catalyst layer comprises at least one metal halide, wherein the metal halide is selected from the group consisting of a first metal halide exhibiting Lewis acid properties that promotes hydrocarbon chain growth and a second metal halide forming a eutectic mixture with the first metal halide that improves stability and fluidity of a molten salt layer.

In one embodiment, the reactor may be provided with a quartz filter having pores formed in a central portion thereof to support the molten catalyst, and the reaction gas may be injected into the molten catalyst layer in a bubble form by passing through the quartz filter.

### Effects of the invention

The present invention provides the following advantageous effects by solving the above-described problems.

First, a method for producing long-chain hydrocarbons according to an embodiment of the present invention is characterized in that a reaction gas comprising greenhouse gases (e.g., carbon dioxide, methane, etc.) is directly brought into contact with a molten catalyst having a specific two-layer structure in a one-pot process to synthesize long-chain hydrocarbons having a carbon number of C7 or greater, thereby significantly simplifying the process compared to conventional multi-step processes (e.g., syngas production followed by FT synthesis), and thus reducing capital costs and operating costs and increasing energy efficiency.

Second, the method of the present invention, unlike conventional technologies that are mainly limited to producing short-chain hydrocarbons having a carbon number of C6 or less or C10 or less, is characterized in that long-chain hydrocarbons having a wide carbon number distribution in a carbon number range of C7 or greater and C33 or less can be produced with high yield, thereby securing various hydrocarbon resources that can be utilized as high value-added chemical products and as raw materials for diesel, jet fuel, and the like.

Third, the molten catalyst system and the production method according to the present invention are characterized in that they can operate effectively even under relatively mild pressure conditions (e.g., near atmospheric pressure), thereby greatly improving equipment stability and ease of operation compared to certain conventional processes requiring ultrahigh pressure conditions.

Fourth, the present invention is characterized in that, by precisely controlling process variables such as reaction temperature (e.g., 600 °C to 900 °C), metal and salt compositions of the catalyst, and composition and flow rate of the reaction gas, flexibility is provided to control the average carbon chain length, carbon number distribution, and chemical composition (e.g., relative ratios of aliphatic hydrocarbons, aromatic hydrocarbons, and oxygenates) of the produced long-chain hydrocarbon mixture according to specific applications. For example, under certain temperature conditions, cycloalkane-based compounds may be predominantly produced, and under other temperature conditions, production of specific aromatic hydrocarbons containing ethyl groups may be prominently observed.

Fifth, the molten catalyst having a two-layer structure according to the present invention is characterized in that it exhibits high activity in the conversion reaction of greenhouse gases and excellent selectivity for target long-chain hydrocarbons. In addition, the catalyst in a molten state may have an effect of suppressing deterioration of catalytic activity in that carbon deposits (coke) that may be generated during the reaction float to the surface due to a density difference, and thus may be advantageous in securing long-term operational stability.

Sixth, the present invention is characterized in that carbon dioxide and methane, which are major greenhouse gases, are directly used as raw materials and converted into useful chemical resources, thereby simultaneously achieving reduction of greenhouse gases and carbon resource utilization, and thus actively contributing to realization of carbon neutrality and a circular economy, and is expected to play an important role in improving sustainability of conventional fossil fuel-based chemical industries.

However, the effects of the present invention are not limited to the effects described above, and include all effects naturally achieved by various configurations proposed in the present invention.

### DESCRIPTION OF THE DRAWINGS

FIG. 1 is a conceptual diagram of a process for upcycling C1 greenhouse gases to long-chain hydrocarbons in a one-pot process according to an embodiment of the present invention.
FIG. 2 is a schematic diagram of an experimental apparatus configuration of a thermochemical upcycling system according to an embodiment of the present invention.
FIG. 3 is a photograph of a catalyst cooled after the reaction according to an embodiment of the present invention.

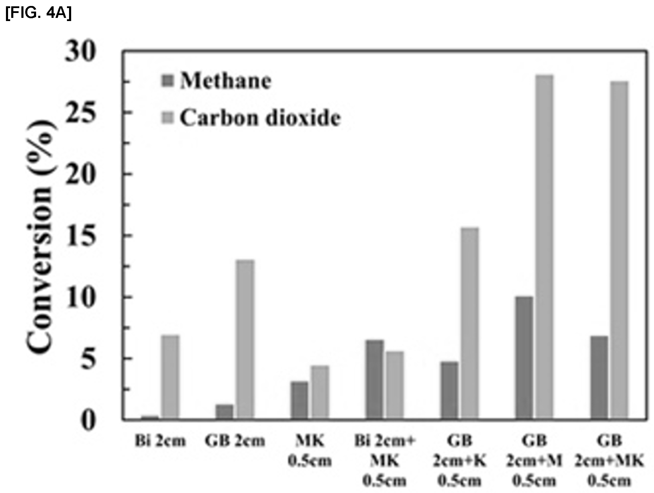

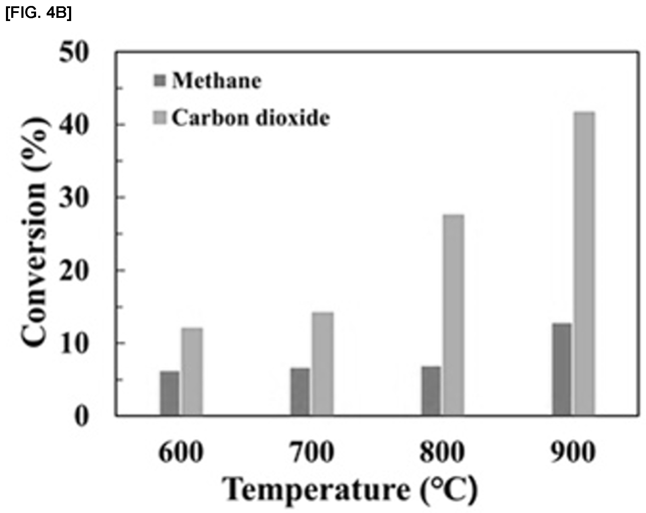

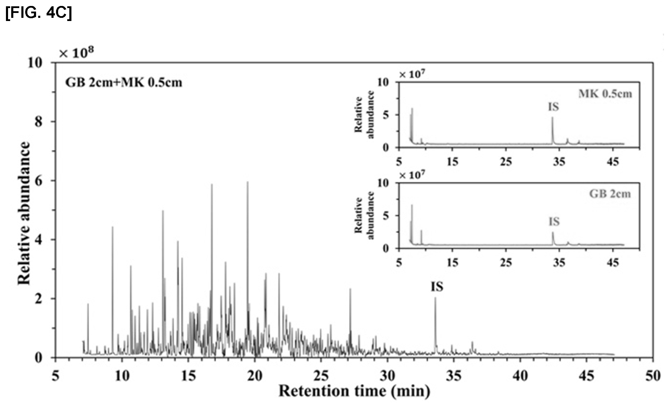

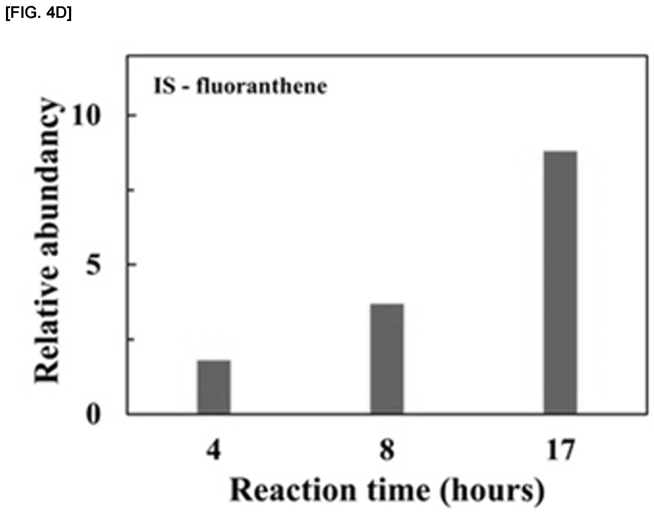

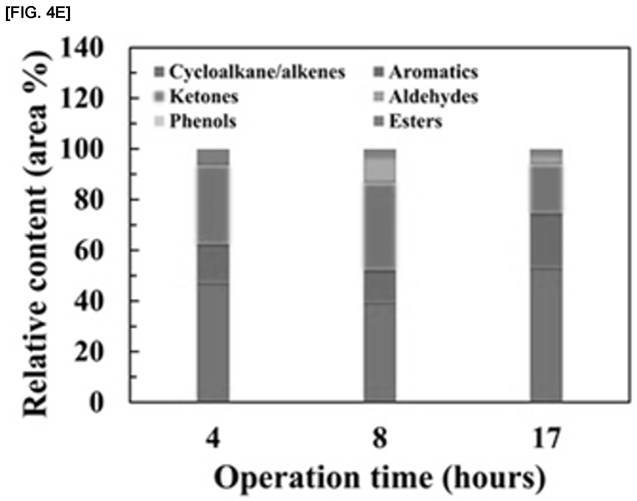

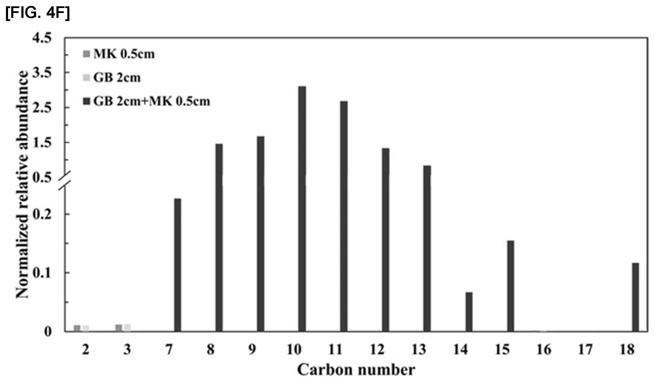

FIG. 4 shows results of production of long-chain hydrocarbons using a GB+MK molten catalyst according to an embodiment of the present invention, wherein (A) shows CH₄ and CO₂ conversion rates for various catalyst combinations, (B) shows CH₄ and CO₂ conversion rates at different reaction temperatures of a reference catalyst, (C) shows overall GC-MS spectra of products when the reference catalyst and comparative catalysts are used, (D) shows relative production amounts of long-chain hydrocarbons over reaction time, (E) shows relative contents of major chemical groups in the products over operation time, and (F) is a graph showing normalized relative abundance of compounds by carbon number.
FIG. 5 shows chemical structures of long-chain hydrocarbons according to reaction temperature according to an embodiment of the present invention, wherein (A) shows chemical structures of major products, (B) shows color and relative content of a product solution according to operation temperature, and (C) shows results of ¹H-¹³C HSQC NMR spectrum analysis.
FIG. 6 shows results of catalyst characterization analysis according to an embodiment of the present invention, wherein (A) is an SEM/EDS elemental mapping image, (B) shows XRD analysis results, (C) shows in-situ high-temperature XRD analysis results, and (D) shows XPS analysis results.

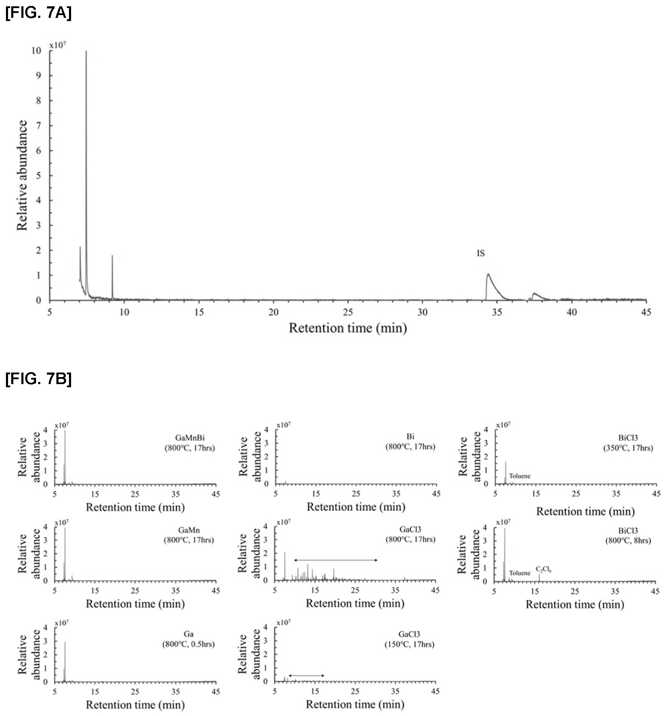

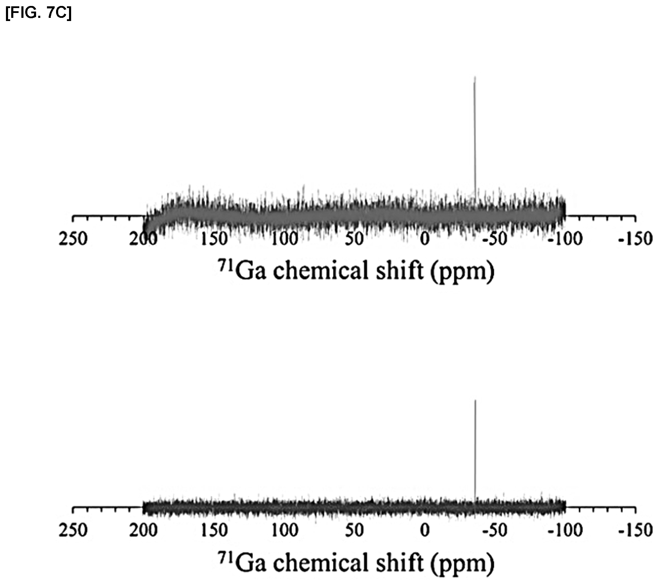

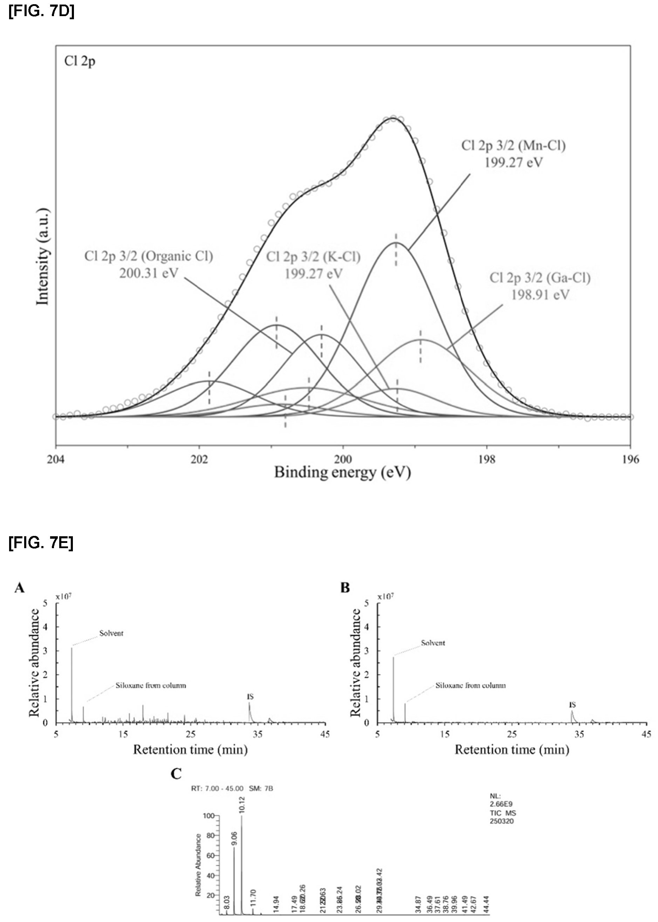

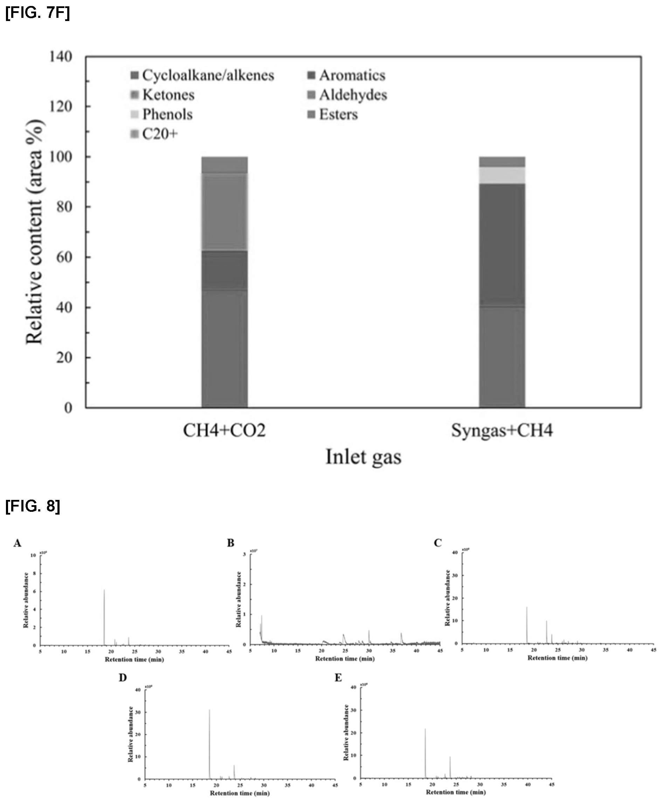

FIG. 7A compares GC-MS analysis results when only syngas is injected and when methane and carbon dioxide are injected according to an embodiment of the present invention. FIG. 7B shows GC-MS spectra of hydrocarbon products for various catalysts according to an embodiment of the present invention. FIG. 7C shows results of ⁷¹Ga NMR spectrum analysis of a solution according to an embodiment of the present invention. FIG. 7D shows results of Cl 2p XPS spectrum analysis according to an embodiment of the present invention. FIG. 7E compares GC-MS analysis results according to various reaction gas combinations according to an embodiment of the present invention. FIG. 7F shows relative content changes according to injected gases in a CDCl₃ solution according to an embodiment of the present invention.
FIGS. 8A-8E are GC-MS spectra of results of generation of long-chain hydrocarbons using catalysts having various metal combinations according to an embodiment of the present invention, wherein (A) shows SnBi + LiCl, (B) shows NiBi + CaCl₂, (C) shows CuBi + MgCl₂, (D) shows FeBi + CuCl₂, and (E) shows results using a high-entropy catalyst (FeSnNiCuBi + composite salt).
FIG. 9 is a graph showing changes in (A) methane conversion rate and (B) carbon dioxide conversion rate according to operation pressure according to an embodiment of the present invention.
FIG. 10 is an example of an operation temperature range according to an embodiment of the present invention, and is a data graph in which methane pyrolysis is performed using a GaBi catalyst at a temperature range of 700 °C to 1100 °C with methane as a reactant.

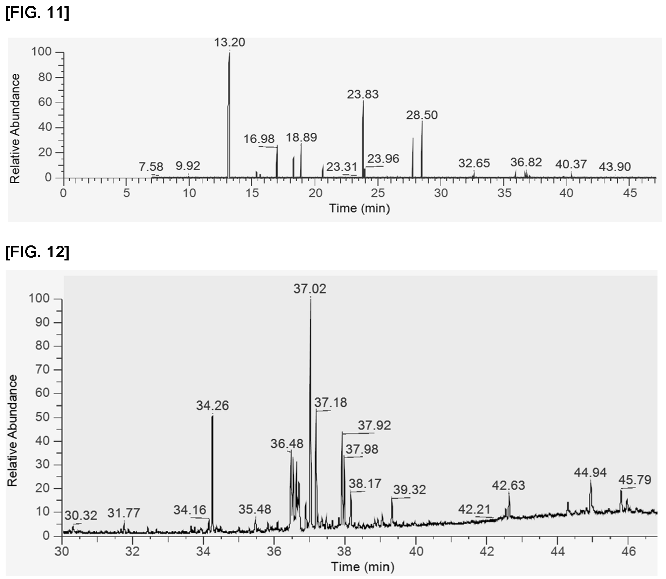

FIG. 11 is an example relating to an ethylene reactant according to an embodiment of the present invention, and is a GC-MS spectrum data graph of hydrocarbon products when ethylene pyrolysis is performed at 900 °C using C₂H₄ as a reactant.
FIG. 12 is an example relating to hydrocarbon products having a carbon number of C33 or less according to an embodiment of the present invention, and is a GC-MS spectrum graph of hydrocarbon products obtained when CH₄ 4sccm and CO₂ 4sccm are used as reactants for 17 hours at 900 °C using a GB+MK catalyst, wherein peak corresponding to C32 and C33 products appears at RT = 44.94 and 45.96 min.

### DETAILED DESCRIPTION OF THE INVENTION

The embodiments of the present invention are provided for the purpose of illustrating the technical idea of the present invention. The scope of rights according to the present invention is not limited to the embodiments described below or the detailed description thereof.

All technical and scientific terms used in the present invention have the meanings generally understood by those skilled in the art to which the present invention pertains, unless otherwise defined. All terms used herein are selected for the purpose of describing the present invention more clearly and are not intended to limit the scope of the present invention.

Expressions such as "comprising," "including," and "having," as used in the present invention, should be understood as open-ended terms that imply the possibility of comprising other embodiments unless otherwise stated in the context.

Singular expressions used herein may include plural meanings unless otherwise clearly indicated, and this also applies to singular expressions described in the claims.

Greenhouse gases, particularly carbon dioxide (CO₂), the atmospheric concentration of which is continuously increasing, and methane (CH₄), which causes a strong greenhouse effect, are identified as major causes of global warming and climate change, and effective reduction and utilization thereof are urgent issues at a global level. Under this background, carbon capture and utilization (CCU) technologies, which chemically convert greenhouse gases into useful materials or energy sources rather than simply capturing and storing them, are receiving increasing attention. In particular, technologies for directly synthesizing hydrocarbons, especially long-chain hydrocarbons having a carbon number of C7 or greater, from methane and/or carbon dioxide are of great importance in reducing dependence on fossil fuels and establishing sustainable chemical and energy production systems.

However, most hydrocarbon synthesis technologies that have been commercialized or are under research and development, such as Fischer-Tropsch processes, electrochemical reduction methods, or other thermochemical conversion methods, suffer from limitations such as complexity of multi-step processes, requirement of harsh reaction conditions such as high pressure or high temperature, limited production mainly of short-chain hydrocarbons, generation of undesired by-products, low energy efficiency, or low selectivity.

Accordingly, the present invention is directed to solving the above-described problems of the prior art, and has as its main object to provide a novel upcycling method for directly and efficiently synthesizing various hydrocarbons, particularly long-chain hydrocarbons having a carbon number of C7 or greater, from greenhouse gases comprising methane and/or carbon dioxide, in a one-pot process using a molten catalyst system having a two-layer structure.

More specifically, the present invention aims to overcome the limitations of conventional solid catalyst-based processes and enable the selective production of desired long-chain hydrocarbons by effectively dispersing a reaction gas within a molten catalyst layer that remains in a liquid state at high temperatures (for example, in a range of 250 °C to 1,200 °C) and ensuring sufficient contact with the catalyst to induce the reaction.

Hereinafter, a method for upcycling greenhouse gases to long-chain hydrocarbons according to an embodiment of the present invention will be described in detail with reference to the Figures.

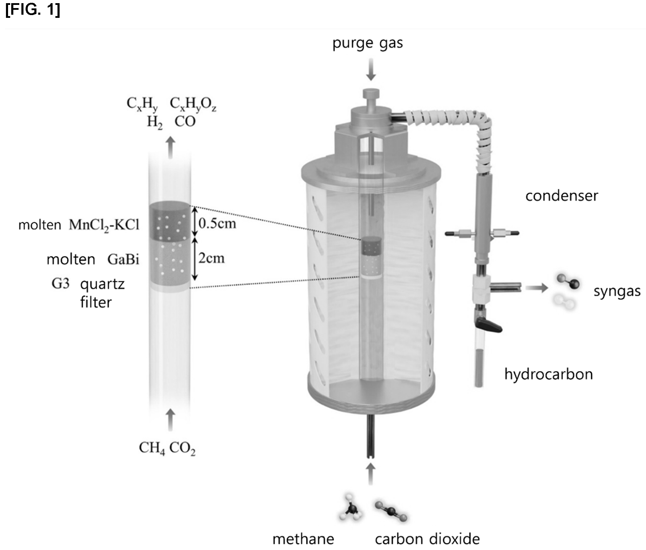

FIG. 1 schematically illustrates a conceptual diagram of an upcycling process of greenhouse gases to long-chain hydrocarbons according to an embodiment of the present invention.

Referring to FIG. 1, the system of the present invention comprises a reaction gas supply unit, a reactor charged with a molten catalyst, and a product recovery unit for recovering produced hydrocarbons.

Greenhouse gases comprising methane (CH₄) and/or carbon dioxide (CO₂) supplied from the reaction gas supply unit are introduced into a lower part of the reactor. The introduced reaction gas passes through a molten catalyst layer having a two-layer structure provided in the reactor. The molten catalyst layer is arranged as a first molten catalyst layer and a second molten catalyst layer along a flow direction of the reaction gas. For example, the first molten catalyst layer may sequentially be positioned below the second molten catalyst layer. During this process, the reaction gas effectively contacts with the molten catalyst and is converted into various hydrogen or hydrocarbon products through a chemical reaction. Purging gas (e.g., Ar) may be supplied to an upper part of the reactor. Gaseous products and unreacted gases discharged from the reactor are guided through a discharge line to the product recovery unit comprising a condenser. In the condenser, long-chain hydrocarbons having a carbon number of C7 or greater are condensed into liquid or solid form, while uncondensed gases (e.g., hydrogen (H₂), carbon monoxide (CO), and unreacted methane and carbon dioxide) may be discharged outside the system or transferred to additional analysis or recycling processes.

Hereinafter, each component and operating principle of the present invention will be described in more detail.

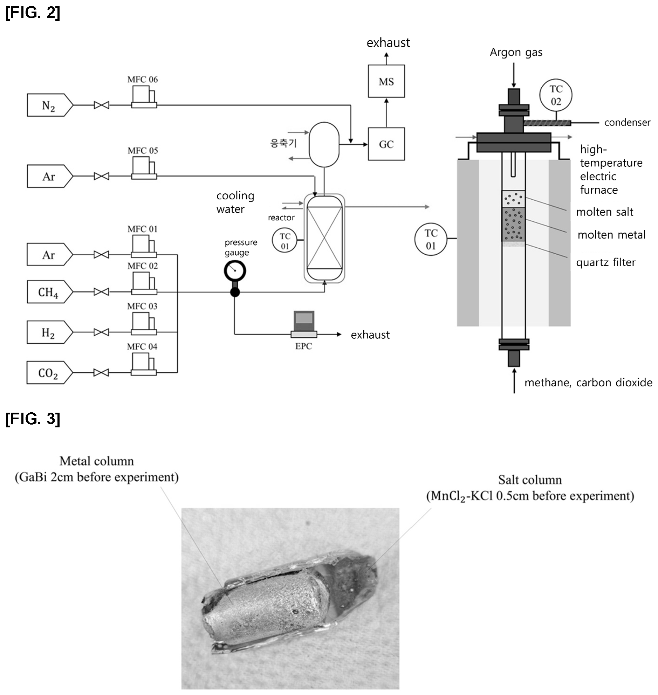

Upcycling of greenhouse gases according to the present invention may be carried out in the reaction system shown in FIG. 1 and FIG. 2.

The reactor may be constructed from a vertically installed quartz tube, and the interior of which is filled with the aforementioned two-stage molten catalyst. A porous quartz filter is formed in the middle part of the quartz tube, which supports the molten catalyst layer above it and the molten salt layer formed on top of the molten catalyst layer.

The reaction gas is injected into the lower part of the reactor, with its flow rates controlled by individual mass flow controllers (MFCs).

The injected reaction gas passes through pores of the quartz filter and is dispersed in the form of fine bubbles, thereby rising through the molten catalyst layer. This bubble column method maximizes the contact area between gas reactants and the liquid molten catalyst and ensures sufficient reaction time, thereby enhancing mass transfer and reaction efficiency.

An inert purge gas such as argon (Ar) may be supplied to the upper space of the reactor to control an internal atmosphere of the reactor and minimize incidental gas-phase reactions. The temperature of the reactor may be precisely controlled using a high-temperature electric furnace and thermocouple(TC01, TC02). The reactor temperature may be in a range of 250 °C to 1,200 °C, preferably 600 °C to 900 °C. The pressure may be controlled within the range of atmospheric pressure to 50 atm. A pressure gauge and an Electronic Pressure Controller(EPC), which vents gas to ensure safety when the set pressure is exceeded, may be installed at the reactor inlet.

A product recovery unit is connected to the reactor outlet to capture the generated long-chain hydrocarbons. The product recovery unit comprises a condenser in which cooling water is circulated, and a connection pipe between the reactor outlet and the condenser is maintained at a predetermined temperature (e.g., 250 to 300 °C) using a heating tape or the like, thereby preventing high-boiling-point hydrocarbons in the product from being prematurely condensed and causing blockage. In the condenser, long-chain hydrocarbons among products discharged in a gaseous phase are liquefied or solidified and collected.

The molten catalyst used in the present invention is characterized by having a two-layer structure comprising a first molten catalyst layer and a second molten catalyst layer. Such a two-layer structure maximizes overall catalytic performance through interlayer interactions while each layer performs its own catalytic function.

The first molten catalyst layer exists in a liquid phase within an operating temperature range and participates in activation and conversion reactions of greenhouse gases (CH₄, CO₂). The alloy constituting the first molten catalyst layer may comprise a first metal (M1) providing Lewis acid sites for oligomerization and cyclization reactions of alkanes and a second metal (M2) enabling the alloy to exist in a liquid phase at a reaction temperature.

For example, the first metal may be at least one selected from the group consisting of metal-based materials comprising gallium (Ga), tin (Sn), nickel (Ni), copper (Cu), and iron (Fe), and salts thereof, and the second metal may be bismuth (Bi). More specifically, the first molten catalyst layer may comprise an alloy having a composition of M1ₓM2₁₋ₓ(where x may be 0.01 to 0.5). In the case of a catalyst consisting only of the second metal, there is a problem in that catalytic activity is low; however, in the present invention, by further comprising the first metal, the conversion rate of greenhouse gases is significantly increased.

The second molten catalyst layer is disposed after the first molten catalyst layer in a flow direction of reactants and serves to promote growth and selective formation of long-chain hydrocarbons. For example, the second molten catalyst layer may comprise a first molten salt and a second molten salt. As the first molten salt, halides of metals such as manganese (Mn), lithium (Li), calcium (Ca), magnesium (Mg), and copper (Cu) may be used, and as the second molten salt, halides of alkali metals (e.g., potassium chloride, KCl) may be used. In this case, a molar ratio of the first molten salt to the second molten salt may be 0.33:0.67 to 0.67:0.33. The second molten catalyst layer provides additional Lewis acid sites capable of promoting carbon-carbon bond formation reactions such as Friedel-Crafts alkylation reactions or Diels-Alder reactions, thereby contributing to growth of chain lengths of initial hydrocarbon intermediates generated in the first molten catalyst layer. In addition, the first molten salt stabilizes active sites of the first molten catalyst layer and controls diffusion of reaction intermediates through physical and chemical interactions at an interface with the first molten catalyst layer, thereby providing a synergistic effect of improving performance of the entire catalyst system, and by using the second molten salt together with the first molten salt, the total weight of the second molten catalyst layer is reduced while maintaining a conversion rate of reaction gases, thereby improving operational stability by preventing collapse of the salt layer and mitigating filter clogging.

The molten catalyst of the present invention may be prepared and activated by the following method.

Initially, precursors of the first metal and the second metal constituting the first molten catalyst layer (e.g., high-purity Ga and Bi shots) are mixed at a predetermined ratio and subjected to arc melting in a vacuum arc melter to prepare a uniform alloy.

The prepared metal alloy is loaded onto a porous support (e.g., a quartz filter) installed inside a reactor (e.g., a quartz tube).

Next, salt precursors constituting the second molten catalyst layer are uniformly mixed and added onto the already loaded metal layer.

Thereafter, the reactor loaded with the catalyst is heated stepwise under a gas atmosphere comprising hydrogen. For example, the reactor is first heated to 600 °C to melt the metal alloy and maintained for a predetermined time, then cooled to secure homogeneity, and reheated to 750 °C together with the salt layer to form a molten salt layer and activate the catalyst through a reduction process for a predetermined time.

Finally, a reaction temperature is set to a target operating temperature to prepare for a hydrocarbon synthesis reaction. The reaction temperature may be 250 °C to 1,200 °C, preferably 600 °C to 900 °C.

FIG. 3 is a photograph showing an actual appearance of a catalyst cooled after the reaction through the above-described process.

### Examples

Hereinafter, preferred embodiments are provided to facilitate understanding of the present invention; however, the following embodiments are merely illustrative of the present invention, and the scope of the present invention is not limited to the following embodiments.

### Example 1: Synthesis of long-chain hydrocarbons using a reference catalyst (Ga_{0.11}Bi_{0.89} / MnCl₂-KCl (67:33 at %))

In this example, a molten catalyst having a two-layer structure was prepared as follows. Initially, the first molten catalyst layer (Ga_{0.11}Bi_{0.89}) was prepared.

High-purity gallium (Ga, 99.999%, Sigma-Aldrich) and bismuth (Bi, 4-30 mesh, 99.9%, Sigma-Aldrich) were weighed to have an atomic fraction (at %) of Ga:Bi = 11:89. The weighed metal precursors were loaded on a water-cooled copper plate of a vacuum arc melter (SAMVAC), and the chamber was purged with argon (Ar) gas until a target vacuum level of 9 × 10⁻⁵ Pa was reached. To remove residual oxygen, a gettering process was performed by melting a titanium (Ti) getter for about 40 seconds, and then a current of about 100 A was applied to melt the metal precursors together to form an alloy. The prepared alloy was flipped once and the melting process was repeated to ensure homogeneity. The thus-prepared Ga_{0.11}Bi_{0.89} alloy was then prepared for loading into a reactor.

A second molten catalyst layer (MnCl₂-KCl, 67:33 at %) was prepared using manganese chloride (MnCl₂, ≥99%, Sigma-Aldrich) and potassium chloride (KCl, 99.0-100.5%, Sigma-Aldrich) powders. Prior to use, the manganese chloride powder was dried in a vacuum oven at 200 °C for about 20 hours to remove moisture. The dried manganese chloride and potassium chloride were weighed to have an atomic fraction (at %) of MnCl₂:KCl = 67:33, uniformly mixed, and prepared for loading on the first molten catalyst layer.

Next, formation and activation of the two-layer catalyst in the reactor were performed. A vertical reactor having a quartz tube of 700 mm in length, 12 mm in outer diameter, and 10 mm in inner diameter, with a G3-grade quartz filter having a thickness of 1 mm welded at a central portion, was used. Initially, an amount corresponding to a height of about 2 cm of the Ga_{0.11}Bi_{0.89} alloy prepared above was loaded on the quartz filter. Thereafter, the reactor was heated to 600 °C at a heating rate of 15 °C/min under a mixed gas atmosphere of argon (Ar, 10 sccm) and hydrogen (H₂, 10 sccm), maintained for 30 minutes, and then slowly cooled to room temperature. Next, an amount corresponding to a height of about 0.5 cm of the MnCl₂-KCl mixed salt powder was added onto the cooled metal layer. Thereafter, under a mixed gas atmosphere of Ar (10 sccm) and H₂ (10 sccm), the reactor was reheated to 750 °C at a heating rate of 15 °C/min and a reduction process was performed for 50 minutes. After the reduction, the inside of the reactor was purged with Ar gas for about 1 hour and 30 minutes, and then the temperature was increased to a final reaction temperature of 800 °C to complete preparation of the catalyst for a hydrocarbon synthesis reaction.

FIG. 3 is a photograph showing a catalyst cooled after the reaction.

The hydrocarbon synthesis reaction was performed using a system as shown in FIG. 1 and FIG. 2. Methane (CH₄, 4 sccm) and carbon dioxide (CO₂, 4 sccm) were used as reaction gases, and flow rates of each gas were precisely controlled through mass flow controllers and injected into a lower part of the reactor. Argon (Ar) was continuously purged at a flow rate of 10 sccm into an upper portion of the reactor to suppress secondary gas-phase reactions. The temperature of the reactor was maintained at 800 °C using an external high-temperature electric furnace and a thermocouple, and the reaction pressure was maintained at atmospheric pressure (about 1 atm) without separate pressure control. In some experiments, the inlet pressure of the reactor was increased to 1.4 atm to evaluate the effect of pressure. A pressure gauge and an electronic pressure controller (EPC) were installed at an inlet of the reactor, and the system was configured such that gas was automatically discharged for safety when an internal pressure exceeded 1200 torr. The reaction was continuously carried out for 4 hours, 8 hours, or 17 hours.

Gaseous products discharged from an outlet of the reactor were transferred to a condenser through a connection pipe maintained at about 290 °C using a heating tape. The condenser circulated cooling water to liquefy or solidify and capture high-boiling-point products, comprising long-chain hydrocarbons having a carbon number of C7 or greater. The collected liquid and wax-phase products were recovered using 500 µL of CDCl₃ solvent after completion of the experiment, and compositions and structures thereof were qualitatively and quantitatively analyzed using a gas chromatography-mass spectrometer (GC-MS, Thermo Scientific ISQ LT) and a nuclear magnetic resonance spectrometer (NMR, 850 MHz Avance III HD Bruker). When necessary, fluoranthene was used as an internal standard. Non-condensable gases (unreacted gases, H₂, CO₂, etc.) passing through the condenser were mixed with nitrogen (N₂, 1 sccm, internal standard), and compositions thereof were analyzed in real time using an online gas chromatograph (GC, Younglin Chrozen GC, TCD detector, Carboxen-1000 column) and a mass spectrometer (MS, Pfeiffer Vacuum Thermostar).

FIG. 4 shows overall analysis results related to Example 1, wherein (A) shows CH₄ and CO₂ conversion rates for various catalyst combinations, (B) shows CH₄ and CO₂ conversion rates according to reaction temperature of a reference catalyst, (C) shows overall GC-MS spectra of products when the reference catalyst and comparative catalysts are used, (D) shows relative production amounts of long-chain hydrocarbons over reaction time, (E) shows relative contents of major chemical groups in products over operation time, and (F) shows normalized relative abundance of compounds according to carbon number.

FIG. 4A is a bar graph comparing methane (CH₄) and carbon dioxide (CO₂) conversion rates when various catalyst combinations are used under conditions of 800 °C and 17 hours. The x-axis represents compositions of catalysts used, arranged in the order of Bi (pure bismuth metal layer), GB (GaBi alloy metal layer), MK (MnCl₂-KCl salt layer), Bi+MK, GB+K, GB+M, and GB+MK (two-layer structure of GB metal layer and MK salt layer). Methane conversion rates are represented by blue bars and carbon dioxide conversion rates by red bars. Referring to FIG. 4A, it can be seen that GB+M and GB+MK catalyst combinations exhibit significantly higher methane conversion rates (about 10%) and carbon dioxide conversion rates (about 30%) compared to other combinations. In initial experiments, a GB 2 cm + M (MnCl₂) 0.5 cm catalyst showed high methane and carbon dioxide conversion rates; however, due to collapse of the pure MnCl₂ salt layer during heating and reduction, a quartz filter clogging phenomenon occurred, resulting in an increase in pressure and difficulty in stable operation. To solve this problem, KCl was added to prepare a MnCl₂-KCl salt, thereby maintaining gas conversion rates while adjusting total weight and viscosity of the salt layer to stabilize operation. As a result, it is shown that a two-layer structure using a GaBi alloy and MnCl₂ exhibits a synergistic effect in greenhouse gas conversion. In particular, when the GB+K combination without MnCl₂ or MK alone without a metal layer was used, conversion rates were very low, indicating that the combined use of the metal layer and the salt layer are important for conversion of methane and carbon dioxide.

FIG. 4B is a bar graph showing methane and carbon dioxide conversion rates when a reaction was performed for 4 hours while varying a reaction temperature to 600 °C, 700 °C, 800 °C, and 900 °C using a GB+MK catalyst. The x-axis represents the reaction temperature, and the y-axis represents the conversion rate (%). As the reaction temperature increases, both methane and carbon dioxide conversion rates show an increasing tendency, and the conversion rates are improved from about 5% for methane and about 12% for carbon dioxide at 600 °C to about 13% for methane and about 42% for carbon dioxide at 900 °C. This indicates that the catalyst system of the present invention exhibits higher activity at higher temperatures.

FIG. 4C shows GC-MS analysis results of products after a reaction was performed at 800 °C for 17 hours using various catalyst combinations (GB 2 cm, MK 0.5 cm, GB 2 cm+MK 0.5 cm). The x-axis represents retention time (min) in a GC column, and the y-axis represents relative abundance measured by a detector. Referring to FIG. 4C, when a two-layer catalyst of GB 2 cm+MK 0.5 cm is used, a plurality of peaks are observed in a range of 7 to 40 minutes, indicating formation of various hydrocarbon compounds. In contrast, when GB 2 cm or MK 0.5 cm is used alone, almost no noticeable peaks are observed. This reconfirms that a combination of a GaBi metal layer and a MnCl₂-KCl salt layer exhibits a synergistic effect in formation of long-chain hydrocarbons.

FIG. 4D is a graph showing changes in relative abundance of products according to reaction time (4, 8, and 17 hours) at 800 °C using a GB 2 cm+MK 0.5 cm catalyst. The y-axis represents relative abundance based on an internal standard (fluoranthene). As shown in the graph, the relative abundance of products increases proportionally as the reaction time increases, indicating that the reaction proceeds continuously.

FIG. 4E is a bar graph showing changes in relative contents of major chemical groups in products according to operation time (4, 8, and 17 hours). The products are broadly classified into cycloalkanes/alkenes (blue), aromatic hydrocarbons (green), ketones (yellow), aldehydes (red), phenols (purple), and esters (gray). At an early stage of the reaction (4 hours), cycloalkanes/alkenes are mainly produced, and as the reaction time increases (8 and 17 hours), proportions of aromatic hydrocarbons and oxygen-containing compounds such as ketones and aldehydes gradually increase. This indicates that the distribution of products changes with reaction time, and compounds having more diverse chemical structures are generated as time progresses.

FIG. 4F is a bar graph comparing normalized relative abundance of hydrocarbon compounds according to carbon number when GB 2 cm+MK 0.5 cm, GB 2 cm, and MK 0.5 cm catalysts are respectively used. The x-axis represents the carbon number, and the y-axis represents normalized relative abundance based on an internal standard. When the GB 2 cm+MK 0.5 cm catalyst is used, hydrocarbons in a range of C7 to C18 were produced, and in particular, compounds in a range of C8 to C13 were most abundantly produced. In contrast, when using GB 2 cm or MK 0.5 cm catalyst alone, hydrocarbon formation was very limited. These results clearly show that the two-layer catalyst system of the present invention is effective for formation of long-chain hydrocarbons.

### Example 2: Analysis of characteristics of hydrocarbons produced at different temperatures

In this example, a reaction was performed for 4 hours at various reaction temperatures (600 °C, 700 °C, 800 °C, and 900 °C) using a GB 2 cm+MK 0.5 cm catalyst, and chemical characteristics of produced hydrocarbon mixtures were analyzed.

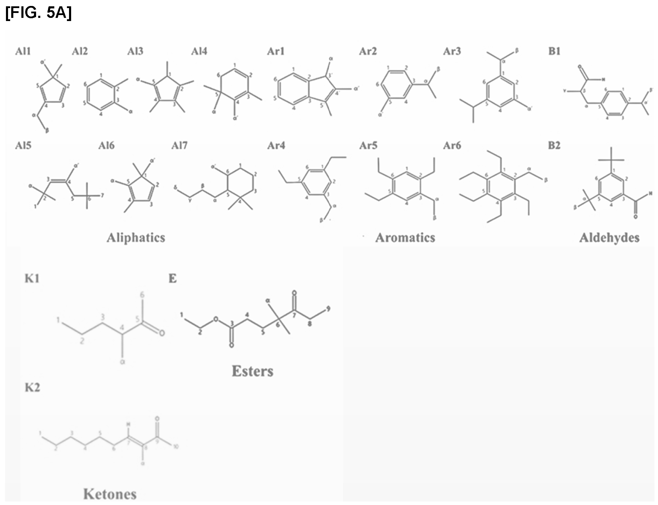

FIG. 5A shows chemical structures of major products that match a NIST mass spectral library based on GC-MS analysis results. The products were broadly classified into aliphatic hydrocarbons (Al, blue), aromatic hydrocarbons (Ar, green), benzaldehyde (B, red), ketones (K, yellow), and esters (E, gray). The aliphatic hydrocarbons mainly have structures such as cyclohexane, cyclohexadiene, and cyclopentadiene having alkyl groups, and some linear olefins (Al5) were also observed. The aromatic hydrocarbons included various alkylbenzene derivatives, and oxygen-containing compounds such as aromatic aldehydes, ketones, and esters were also identified.

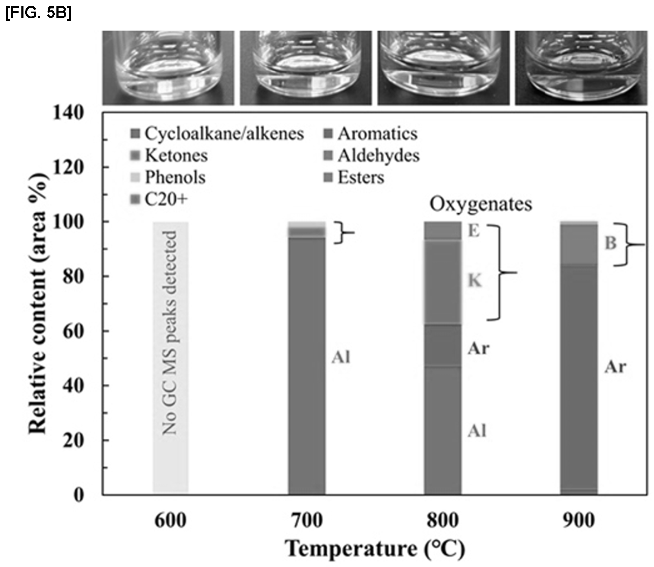

FIG. 5B shows changes in appearance and chemical composition of products according to reaction temperature (600 °C, 700 °C, 800 °C, and 900 °C). The photographs in an upper part show solutions obtained by dissolving mixtures produced at respective temperatures in 500 µL of CDCl₃, and it is observed that a color of the solution gradually changes to a darker yellow as the temperature increases. This is considered to be due to an increase in content of aromatic compounds as the temperature increases. The bar graph below shows relative contents (area %) of compounds produced at each temperature. At 600 °C, almost no peaks are detected in GC-MS; at 700 °C, cycloalkanes/alkenes are mainly produced; at 800 °C, cycloalkanes/alkenes, aromatic hydrocarbons, and ketones are produced in a balanced manner; and at 900 °C, a proportion of aromatic hydrocarbons significantly increases, and oxygenates such as aldehydes are also observed, with a small amount of acids and phenols being formed.

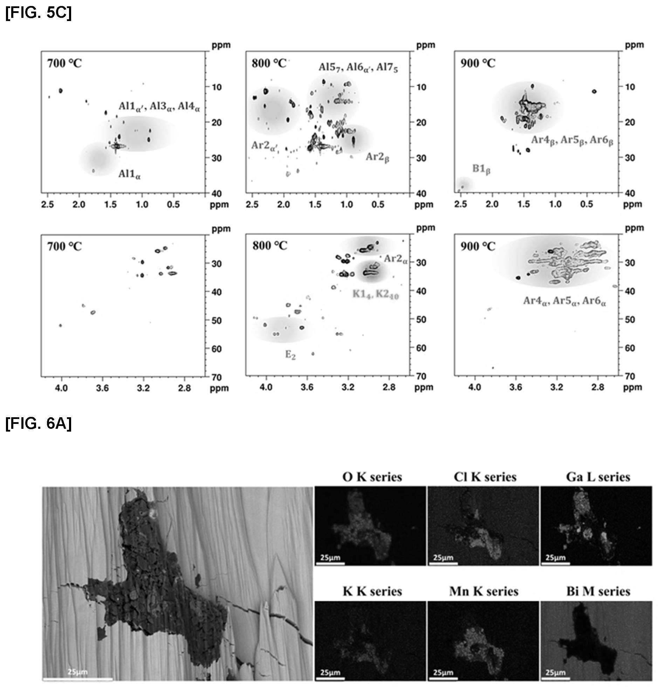

FIG. 5C shows results of ¹H-¹³C HSQC (Heteronuclear Single Quantum Coherence) NMR spectrum analysis of mixtures produced at each reaction temperature. The spectrum shows correlations between hydrogen (¹H) and carbon (¹³C) atoms, thereby allowing more detailed identification of structures of compounds. Spectra in an upper portion represent an aliphatic region of δ_{H} 0.5 to 2.5 ppm and δ_{C} 10 to 40 ppm, and spectra in a lower portion represent a functional group region of δ_{H} 2.8 to 4.0 ppm and δ_{C} 30 to 70 ppm.

In the case of the 700 °C sample, signals are observed in a range of δ_{C}/δ_{H} 40-0/2.6-0 ppm, which indicate methyl and ethyl groups in cycloalkane/alkene (Al1_{α'}, Al3_{α}, Al4_{α}, Al1_{α}) structures. In the 800 °C sample, signals in ranges of δ_{C}/δ_{H} 35-30/3.2-2.8 ppm and δ_{C}/δ_{H} 60-50/4.0-3.6 ppm are additionally observed, which indicate hydrogen and carbon adjacent to an ethoxy group of an ester (E2) and a carbonyl group of ketones (K14', K210). In the 900 °C sample, strong signals are observed in ranges of δ_{C}/δ_{H} 40-20/3.6-2.6 ppm and 25-10/1.8-0.8 ppm, which support the presence of alkyl aromatic hydrocarbons having ethyl groups (Ar4_{α}, Ar5_{α}, Ar6_{α}, Ar4_{β}, Ar5_{β}, Ar6_{β}). In addition, signals in a range of δ_{C}/δ_{H} 40-35/2.6-2.2 ppm indicate the presence of an aldehyde (B1_{β}).

Taking these results together, it can be seen that the types and structures of hydrocarbons produced vary depending on the reaction temperature, and that the proportion of compounds having complex structures and aromatic compounds increases as the temperature increases. The developed catalyst system suggests the possibility of selectively producing hydrocarbons having various structures by controlling the reaction temperature.

### Example 3: Catalyst Properties Analysis

In this example, changes in physical and chemical properties of the catalyst before and after the reaction were investigated using various analysis methods.

FIG. 6A shows scanning electron microscope (SEM) images and energy-dispersive X-ray spectroscopy (EDS) elemental mapping results of a catalyst powder sample collected after the reaction was performed at 800 °C for 4 hours. The SEM image at the upper left shows the morphology of the sample, and the remaining images show distributions of each element (O, Cl, Ga, K, Mn, Bi). Through these results, it can be confirmed that phases having various elemental compositions, such as (K, Cl), (Mn, Ga, O), (Mn, O), (Ga, O), (Bi), and (Bi, O), are present.

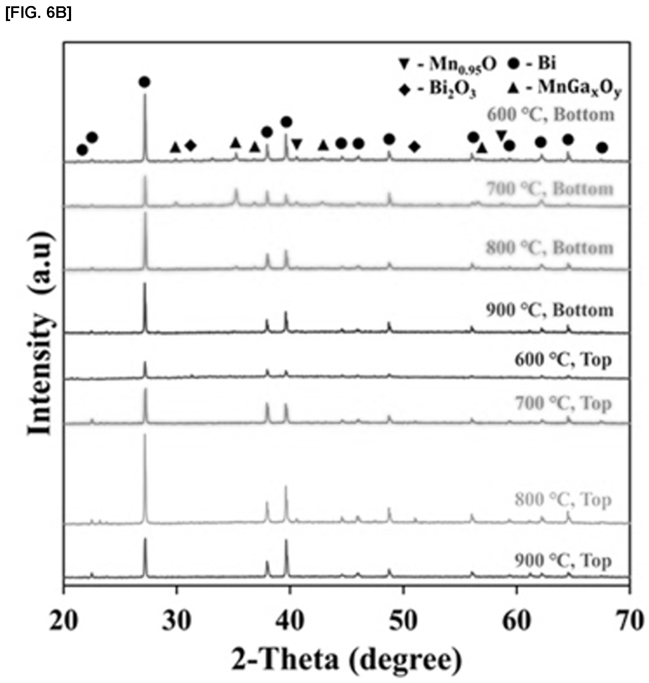

FIG. 6B shows X-ray diffraction (XRD) analysis results of samples respectively collected from a top portion and a bottom portion of the catalyst after the reaction was performed for 4 hours at various reaction temperatures (600 °C, 700 °C, 800 °C, and 900 °C). The x-axis represents a diffraction angle (2-theta, degree), and the y-axis represents relative diffraction intensity (Intensity, a.u.). In all samples, peaks corresponding mainly to a bismuth (Bi) crystalline phase (PDF# 00-005-0519) were observed, and in some samples, particularly in the bottom portion of the metal layer, oxide phases such as Bi₂O₃ (PDF# 04-011-1986), Mn_{0.95}O (PDF# 04-002-8161), and MnGaₓO_{y} (PDF# 04-024-7643) were also detected in small amounts. Peaks related to gallium or potassium chloride were not clearly observed, which is presumed to be because the amount thereof is very small or because they exist in an amorphous state.

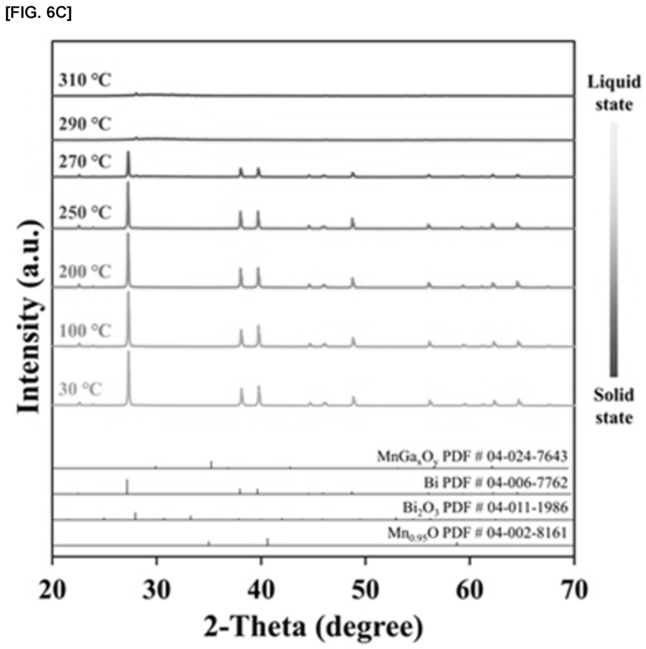

FIG. 6C shows in-situ high-temperature XRD analysis results of the catalyst, in which changes in crystal structure were observed while the temperature was gradually increased from room temperature to 310 °C. From room temperature to 270 °C, peaks of the bismuth crystalline phase are clearly observed, but at 290 °C or higher, all peaks disappear. This indicates that the catalyst is completely melted at this temperature and converted into a homogeneous liquid state. However, even at 290 °C or higher, a small peak is observed near 2θ = 28°, which suggests that a small amount of bismuth oxide is present.

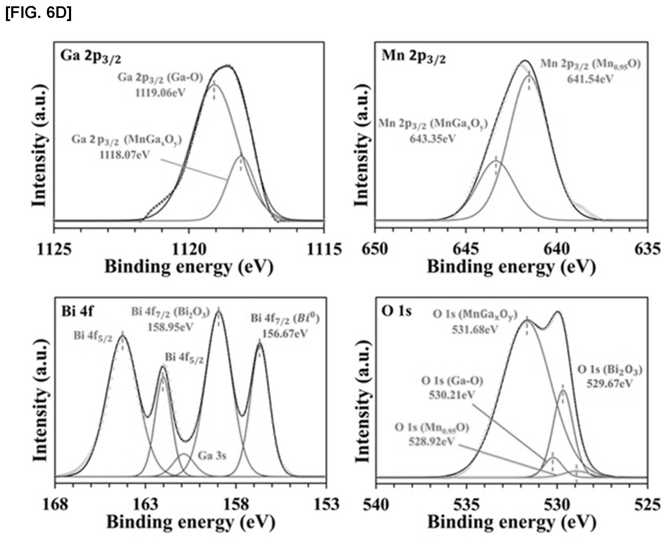

FIG. 6D shows X-ray photoelectron spectroscopy (XPS) analysis results of the catalyst sample, and shows binding energy spectra of gallium (Ga 2p3/2), manganese (Mn 2p3/2), bismuth (Bi 4f), and oxygen (O 1s), respectively. In the Bi 4f spectrum, peaks corresponding to Bi³⁺ (158.95 eV, 164.2 eV) and metallic Bi (156.67 eV, 162.02 eV) were observed. The Mn 2p3/2 spectrum is separated into two peaks at 641.54 eV and 643.35 eV, which indicate manganese in Mn_{0.95}O and MnGaₓO_{y}states, respectively. The Ga 2p3/2 spectrum consists of two peaks at 1119.06 eV and 1118.07 eV, which indicate gallium in Ga³⁺ and MnGaₓO_{y} states, respectively. The O 1s spectrum shows peaks at 528.92 eV, 529.67 eV, 530.21 eV, and 531.68 eV, which indicates that various metal-oxygen bonding environments are present.

Taken together, these analysis results show that the molten catalyst having a two-layer structure of the present invention undergoes complex chemical and physical changes during the reaction, and that various active phases are formed. In particular, active metal components such as gallium and manganese exist in various oxidation states, and it is considered that they play important roles in activation of methane and carbon dioxide and hydrocarbon chain growth.

### Example 4: Analysis of Reaction Mechanism

In this example, a reaction mechanism by which C1 greenhouse gases are converted into long-chain hydrocarbons was analyzed through various additional experiments.

First, as a result of performing a reaction by injecting only syngas (H₂+CO) into a GB 2 cm + MK 0.5 cm catalyst, it was confirmed that hydrocarbons were not produced. FIG. 7A compares GC-MS analysis results when methane and carbon dioxide were injected and when only syngas was injected. When only syngas was injected, peaks corresponding to hydrocarbons having a carbon number of C7 or greater were hardly observed. This suggests that the reaction pathway of the present invention does not simply proceed through syngas and then through a Fischer-Tropsch reaction.

In addition, experiments using several reference materials were performed to confirm whether hydrocarbons are produced from materials having various elemental combinations. FIG. 7B shows a GC-MS spectrum when a reaction was performed at 800 °C using pure GaCl₃ as a reference material. Surprisingly, when GaCl₃ was used, it was confirmed that a large amount of hydrocarbons qualitatively similar to those obtained when the GB 2 cm + MK 0.5 cm catalyst was used was produced. This suggests the possibility that GaCl₃ or a similar gallium-chlorine compound acts as an important intermediate during the reaction.

To confirm whether GaCl₃ is also produced in the process of the present invention, ⁷¹Ga NMR and Cl 2p XPS analyses were performed. FIG. 7C shows ⁷¹Ga NMR analysis results of the catalyst after the reaction, in which a peak corresponding to GaCl₃ was confirmed. In addition, the Cl 2p XPS analysis results of FIG. 7D also confirm that Ga-Cl bonds are present. These results support the hypothesis that GaCl₃ or a similar gallium-chlorine compound is produced during the reaction and acts as an important catalytically active species.

Finally, in order to investigate the effect of reactant composition on reactivity and products, experiments using various combinations of reaction gases were performed. FIG. 7E compares GC-MS analysis results according to various reaction gas combinations (CH₄+CO₂, syngas+CO₂, syngas+CH₄, H₂O+CO₂). When syngas and CO₂ were injected together, hydrocarbons were not produced, whereas when syngas and CH₄ were injected, hydrocarbons were produced. In addition, hydrocarbons were also produced when water (H₂O) was injected together with carbon dioxide; however, as can be seen in FIG. 7F, formation of oxygenates such as ketones was significantly reduced. These results suggest that methane acts as a main carbon source for formation of long-chain hydrocarbons, and carbon dioxide mainly contributes to formation of oxygenates.

Based on these experimental results, the reaction mechanism of the present invention may be proposed as follows. Methane is activated in the molten GaBi catalyst layer to form active intermediates such as CH₃, CH₂, and CH, and carbon dioxide is simultaneously activated to generate CO and O, some of which react with hydrogen to form H₂O. At an interface between the metal layer and the salt layer, active gallium-chlorine compounds such as GaCl₃ are formed, and the activated methane intermediates form C-C bonds through oligomerization reactions by the gallium-chlorine compounds and Friedel-Crafts alkylation reactions or Diels-Alder reactions in the MnCl₂-KCl molten salt layer, thereby growing into long-chain hydrocarbons. Oxygen species generated from carbon dioxide react with some hydrocarbons to form oxygenates such as ketones, aldehydes, and esters, and hydrocarbons having various structures and compositions are generated depending on the reaction temperature, with a proportion of aromatic compounds increasing as the temperature increases.

The catalyst system of the present invention converts C1 greenhouse gases to long-chain hydrocarbons efficiently through a new reaction pathway different from conventional Fischer-Tropsch synthesis or other C1 conversion processes, and is significant particularly in that methane and carbon dioxide can be utilized simultaneously.

### Example 5: Synthesis of long-chain hydrocarbons using catalyst systems having various metal combinations

In this example, conversion performance of greenhouse gases to long-chain hydrocarbons was evaluated by variously changing components of the first molten catalyst layer and the second molten catalyst layer.

Catalysts having various compositions, such as Sn_{0.5}Bi_{0.5} + LiCl, Ni_{0.25}Bi_{0.75} + CaCl₂, Cu_{0.45}Bi_{0.55} + MgCl₂, Fe_{0.01}Bi_{0.99} + CuCl₂, and Fe_{0.01}Sn_{0.1}Ni_{0.1}Cu_{0.1}Bi_{0.69} + LiCl-CaCl₂-MgCl₂-CuCl₂-MnCl₂-KCl (1:1:9:1:1:1 wt %) were prepared in the same manner as in Example 1. All catalyst systems were prepared to have a height of 2 cm for the metal layer (first molten catalyst layer) and 0.5 cm for the salt layer (second molten catalyst layer), in the same manner as in Example 1, and reactions were performed using methane (4 sccm) and carbon dioxide (4 sccm) at 800 °C for 4 hours.

FIGS. 8A-E are GC-MS spectra showing results of long-chain hydrocarbon formation according to various catalyst combinations. In all catalyst combinations, long-chain hydrocarbons having a carbon number of C7 or greater were produced; however, the compositions and distributions thereof differed depending on the catalyst combinations.

In the case of a Sn_{0.5}Bi_{0.5}+LiCl catalyst (FIG. 8A), a hydrocarbon distribution similar to that of the GaBi+MnCl₂-KCl catalyst was observed, but a proportion of aromatic hydrocarbons was slightly lower. A Ni_{0.25}Bi_{0.75}+CaCl₂ catalyst (FIG. 8B) promoted formation of aromatic hydrocarbons, and in particular, alkylbenzenes in a range of C9-C12 were abundantly produced. A Cu_{0.45}Bi_{0.55}+MgCl₂ catalyst (FIG. 8C) showed predominant formation of aliphatic hydrocarbons, with a high ratio of cycloalkanes to alkenes. A Fe_{0.01}Bi_{0.99} + CuCl₂ catalyst (FIG. 8D) showed a somewhat lower overall hydrocarbon production amount, but hydrocarbons in a range of C8-C10 were produced with high selectivity.

Notably, a high-entropy type catalyst of Fe_{0.01}Sn_{0.1}Ni_{0.1}Cu_{0.1}Bi_{0.69} + LiCl-CaCl₂-MgCl₂-CuCl₂-MnCl₂-KCl (FIG. 8E) operated stably and produced long-chain hydrocarbons despite comprising various components. This catalyst provides various reaction pathways through a synergistic effect of each component due to its multicomponent composition, thereby enabling production of hydrocarbons over a wider range.

These results show that the two-layer molten catalyst system of the present invention may be configured with various metal and salt combinations, and that distributions and characteristics of hydrocarbons produced may be controlled depending on each combination. Accordingly, customized hydrocarbon production is possible by selecting an optimal catalyst combination according to characteristics of target products.

### Example 6: Effect of pressure variation

In this example, an effect of reaction pressure on greenhouse gas conversion rate and product characteristics was investigated.

A reaction was performed for 4 hours at 800 °C using a Ga_{0.11}Bi_{0.89} + MnCl₂-KCl (67:33 at %) catalyst, while varying a reaction pressure to 1.0 atm (standard atmospheric pressure), 1.1 atm, 1.2 atm, and 1.4 atm. The reaction pressure was controlled using an electronic pressure controller (EPC) connected to an inlet of the reactor.

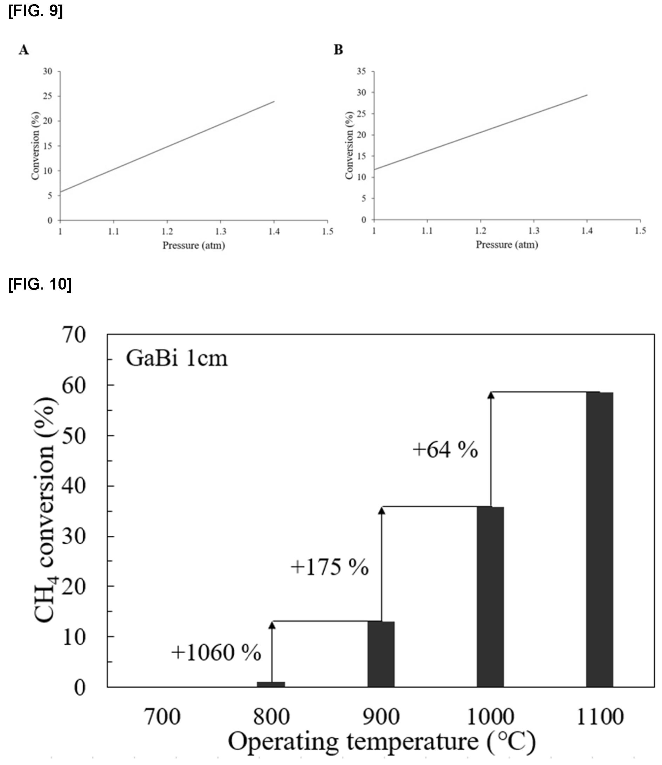

FIG. 9 is a graph showing changes in methane and carbon dioxide conversion rates according to reaction pressure. As the pressure increases, a methane conversion rate (blue bars) increases from 7.2% (1.0 atm) to 13.5% (1.4 atm), and a carbon dioxide conversion rate (red bars) increases from 21.5% (1.0 atm) to 38.7% (1.4 atm), both showing a proportional increase. This is considered to be because contact time and solubility of reactants in the molten catalyst increase as the pressure increases.

According to GC-MS analysis results, as the pressure increases, a carbon number distribution of produced long-chain hydrocarbons changes, and in particular, the production ratio of long-chain hydrocarbons having a carbon number of C12 or greater tended to increase. This is interpreted as being due to promotion of carbon-carbon bond formation and chain growth reactions under higher pressure conditions. However, under conditions of 1.4 atm or higher, formation of solid carbon (coke) increases and a quartz filter clogging phenomenon is observed, and thus it is confirmed that selection of an appropriate pressure range is important for long-term stable operation.

These results show that the process of the present invention is capable of controlling greenhouse gas conversion rates and distributions of products through appropriate pressure control. In particular, the fact that the process operates efficiently even at atmospheric pressure and performance can be improved through a slight increase in pressure provides a significant advantage over conventional high-pressure processes.

The above description is merely illustrative of the technical idea of the present invention, and those skilled in the art to which the present invention pertains will be able to make various modifications and changes without departing from the essential characteristics of the present invention. Accordingly, the embodiments disclosed in the present invention are intended not to limit but to explain the technical idea of the present invention, and the scope of the technical idea of the present invention is not limited by these embodiments. The scope of protection of the present invention should be interpreted by the following claims, and all technical ideas within a scope equivalent thereto should be interpreted as being included in the scope of the present invention.

## Claims

1. A method for upcycling greenhouse gases to long-chain hydrocarbons, comprising:
a step of injecting a reaction gas comprising greenhouse gases into a reactor;
a step of inducing a reaction by bringing the reaction gas into contact with a molten catalyst disposed in the reactor, the molten catalyst having a two-layer structure comprising a first molten catalyst layer and a second molten catalyst layer positioned above the first molten catalyst layer;
and a step of obtaining a product comprising hydrocarbons through the reaction in a one-pot process.

2. The method of claim 1,
wherein the hydrocarbons are long-chain hydrocarbons having a carbon number of C7 or greater.

3. The method of claim 1,
wherein the reaction gas comprises at least one selected from the group consisting of methane, carbon dioxide, hydrogen, water, CO, ethane, propane, butane, ethene, propene, and butene.

4. The method of claim 1,
wherein the reaction is performed at a temperature in a range of 250 °C to 1,200 °C.

5. The method of claim 1,
wherein the reaction is performed at a pressure in a range of atmospheric pressure to 50 atm.

6. The method of claim 1,
wherein the first molten catalyst layer is an alloy that exists in a liquid phase within an operating temperature range and comprises at least one metal component that contributes to activation of greenhouse gas reactants or formation of carbon-carbon bonds, and
the second molten catalyst layer comprises at least one metal halide, wherein the metal halide is selected from the group consisting of a first metal halide exhibiting Lewis acid properties that promotes hydrocarbon chain growth and a second metal halide forming a eutectic mixture with the first metal halide that improves stability and fluidity of a molten salt layer.

7. The method of claim 6,
wherein the at least one metal component constituting the first molten catalyst layer is selected from the group consisting of metal-based materials comprising gallium (Ga), bismuth (Bi), tin (Sn), nickel (Ni), copper (Cu), and iron (Fe), and salts thereof.

8. The method of claim 6,
wherein the at least one metal halide constituting the second molten catalyst layer is selected from the group consisting of halides of metals comprising manganese, potassium, lithium, calcium, magnesium, and copper.

9. A hydrocarbon composition,
produced by the method according to any one of claims 1 to 8, and
comprising hydrocarbons having a carbon number of C7 or greater,
wherein the hydrocarbons comprise a plurality of compound groups selected from aliphatic hydrocarbons, aromatic hydrocarbons, and oxygenates.

10. A composition comprising a plurality of hydrocarbon compounds having a carbon number of C7 or greater,
wherein the plurality of hydrocarbon compounds comprise:
(i) at least one aliphatic hydrocarbon selected from cyclohexane derivatives, cyclohexadiene derivatives, cyclopentadiene derivatives having alkyl groups, and linear olefins;
(ii) at least one aromatic hydrocarbon selected from alkylbenzene derivatives and polycyclic aromatic hydrocarbon derivatives; and
(iii) at least one oxygenate selected from aromatic aldehydes, ketones, and esters.

11. The composition of claim 10,
wherein the composition is produced under a reaction temperature condition in a range of 250 °C to 1,200 °C, and
relative content ratios of the aliphatic hydrocarbons, the aromatic hydrocarbons, and the oxygenates vary according to the reaction temperature.

12. The composition of claim 10,
wherein, among hydrocarbons in a range of C7 to C18, hydrocarbons in a range of C8 to C13 are included at a relatively higher proportion than hydrocarbons in other carbon number ranges.

13. A molten catalyst for upcycling greenhouse gases, comprising:
a first molten catalyst layer providing first Lewis acid site and comprising at least one selected from the group consisting of metal-based materials comprising gallium (Ga), bismuth (Bi), tin (Sn), nickel (Ni), copper (Cu), and iron (Fe), and salts thereof; and
a second molten catalyst layer positioned above the first molten catalyst layer,
comprising at least one selected from the group consisting of halides of metals comprising manganese, potassium, lithium, calcium, magnesium, and copper,
and providing a second Lewis acid site that promotes formation of long-chain hydrocarbons.

14. The molten catalyst of claim 13,
wherein the first molten catalyst layer comprises an alloy of gallium (Ga) and bismuth (Bi),
and has a composition of GaₓBi₁₋ₓ(where x is a mole fraction of gallium (Ga) in a range of 0.11 to 0.50).

15. The molten catalyst of claim 13,
wherein the second molten catalyst layer comprises a mixture of a manganese halide and an alkali metal halide, and a molar ratio of the manganese halide to the alkali metal halide is 33:67 to 67:33.

16. A molten catalyst system for producing long-chain hydrocarbons from greenhouse gases, comprising:
(a) a reaction gas supply unit comprising a plurality of mass flow controllers (MFCs) configured to supply a plurality of reaction gases comprising greenhouse gases at respective controlled flow rates;
(b) a vertical reactor made of a quartz tube, connected to the reaction gas supply unit, in which a molten catalyst having a two-layer structure is disposed, and in which a chemical reaction occurs as the reaction gas contacts the molten catalyst;
(c) a temperature control unit comprising a high-temperature electric furnace surrounding the reactor and controlling an internal temperature; and
(d) a product recovery unit connected to an outlet of the reactor to condense long-chain hydrocarbons from gaseous products discharged therefrom and recover the same in liquid or solid form.

17. The system of claim 16,
wherein the molten catalyst comprises a first molten catalyst layer and a second molten catalyst layer positioned above the first molten catalyst layer,
wherein the first molten catalyst layer is an alloy existing in a liquid phase within an operating temperature range and comprising at least one metal component contributing to activation of greenhouse gas reactants or formation of carbon-carbon bonds, and
the second molten catalyst layer comprises at least one metal halide,
wherein the metal halide is selected from the group consisting of a first metal halide exhibiting Lewis acid properties that promotes hydrocarbon chain growth and a second metal halide forming a eutectic mixture with the first metal halide that improves stability and fluidity of a molten salt layer.

18. The system of claim 16,
wherein the reactor is provided with a quartz filter having pores formed in a central portion thereof to support the molten catalyst,
and the reaction gas is injected into the molten catalyst layer in a bubble form by passing through the quartz filter.
